# EUROPEAN PATENT APPLICATION

(11) **EP 4 537 992 A2**
(43) Date of publication of application: **16.04.2025**
(21) Application number: 24205112.6
(22) Date of filing: 07.10.2024
(51) Int. Cl.: B25H 1/04

(54) **MULTIPURPOSE WORKTABLE**

(30) Priority: 12.10.2023 US 202318379428
(71) Applicant: Techtronic Cordless GP, Anderson, SC 29621 (US)
(72) Inventor: VAN WYK, Sage, Anderson, 29621 (US); YEOMANS, Kyle, Anderson, 29621 (US); LOMBARDI, Keith, Anderson, 29621 (US); WACKER, Charles, II, Anderson, 29621 (US); RITTERLING, Doug, Anderson, 29621 (US); MORGAN, Graham, Anderson, 29621 (US); PARSONS, John Derek, Anderson, 29621 (US)
(74) Representative: Novagraaf Group

(57) **Abstract**

A multipurpose worktable and storage support interface are provided. A multipurpose worktable includes a work surface and a leg assembly. The work surface includes an upper surface, a lower surface, and at least one side surface extending between the upper surface and lower surface. The leg assembly is coupled to the lower surface, and includes a wheel and a platform. The leg assembly is configured to transition between an extended position and a collapsed position. In the collapsed position, an upper surface of the platform extends generally perpendicular relative to the upper surface of the work surface to form a transport dolly.

## Description

### FIELD

The present disclosure relates generally to a multipurpose worktable, and more particularly to a multipurpose worktable that may fold into a transport dolly.

### BACKGROUND

Modular workspaces, storage systems, and accessories thereof allow users to create customized solutions for organizing their homes, garages, and other spaces. Additionally, mobile workspaces for hand tools, power tools, and associated accessories may improve accessibility for a user. However, storage space and workspace is often limited particularly for users utilizing their home, garage, or other personal space.

Accordingly, improved mobile and accessible worktables are desired in the art. In particular, mobile and accessible worktables which provide multipurpose use would be advantageous.

### BRIEF DESCRIPTION

Aspects and advantages of the invention in accordance with the present disclosure will be set forth in part in the following description, or may be obvious from the description, or may be learned through practice of the technology.

In accordance with one embodiment, a multipurpose worktable is provided. The multipurpose worktable includes a work surface and a leg assembly. The work surface includes an upper surface, a lower surface, and at least one side surface extending between the upper surface and lower surface. The leg assembly is coupled to the lower surface, and includes a wheel and a platform. The leg assembly is configured to transition between an extended position and a collapsed position. In the collapsed position, an upper surface of the platform extends generally perpendicular relative to the upper surface of the work surface to form a transport dolly.

In accordance with another embodiment, a multipurpose transport dolly is provided. The multipurpose transport dolly includes a frame, a platform coupled to the frame, a support surface extending generally perpendicular to the platform and supported by the frame, a wheel assembly coupled to the frame, and a handle coupled to the frame. The frame includes a pair of legs configured to transition between a storage position and an extended position. In the extended position, the pair of legs supports the support surface and the support surface forms a worktable.

In accordance with another embodiment, a storage support interface is provided. The storage support interface includes a body having a planar surface and one or more mounts. Each mount includes: a first angled support having a projection portion projecting outward from the planar surface and a retaining portion extending at an angle relative to the projection portion, and a second angled support having a projection portion projecting outward from the planar surface and a retaining portion extending at an angle relative to the projection portion. The first angled support and the second angled support are angled toward each other in a downward extending direction. Each mount further includes an opening formed between a lower end of the first angled support and a lower end of the second angled support. Each mount has a Y-shaped bracket receiving section configured to receive a Y-shaped bracket therein. The body further includes an opening between each mount. The storage support interface further includes a coupling section formed in the body above or below the one or more mounts.

These and other features, aspects and advantages of the present invention will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present invention, including the best mode of making and using the present systems and methods, directed to one of ordinary skill in the art, is set forth in the specification, which makes reference to the appended figures, in which:
FIG. 1 is a side perspective view of a multipurpose worktable in an extended position in accordance with embodiments of the present disclosure;
FIG. 2 is a perspective view of a multipurpose worktable in a collapsed configuration and vertical orientation in accordance with embodiments of the present disclosure;
FIG. 3 is a side perspective view of a multipurpose worktable in an extended position in accordance with embodiments of the present disclosure;
FIG. 4 is a bottom perspective view of a multipurpose worktable in an extended position in accordance with embodiments of the present disclosure;
FIG. 5 is a perspective view of a storage support interface in accordance with embodiments of the present disclosure;
FIG. 6A is a perspective view of a storage support interface in accordance with embodiments of the present disclosure;
FIG. 6B is a rear perspective view of the storage support interface of FIG. 6A;
FIG. 7 is a side view of a multipurpose worktable in a collapsed configuration and horizontal orientation in accordance with embodiments of the present disclosure.

### DETAILED DESCRIPTION

Reference now will be made in detail to embodiments of the present invention, one or more examples of which are illustrated in the drawings. The word "exemplary" is used herein to mean "serving as an example, instance, or illustration." Any implementation described herein as "exemplary" is not necessarily to be construed as preferred or advantageous over other implementations. Moreover, each example is provided by way of explanation, rather than limitation of, the technology. In fact, it will be apparent to those skilled in the art that modifications and variations can be made in the present technology without departing from the scope or spirit of the claimed technology. For instance, features illustrated or described as part of one embodiment can be used with another embodiment to yield a still further embodiment. Thus, it is intended that the present disclosure covers such modifications and variations as come within the scope of the appended claims and their equivalents. The detailed description uses numerical and letter designations to refer to features in the drawings. Like or similar designations in the drawings and description have been used to refer to like or similar parts of the invention.

As used herein, the terms "first", "second", and "third" may be used interchangeably to distinguish one component from another and are not intended to signify location or importance of the individual components. The singular forms "a," "an," and "the" include plural references unless the context clearly dictates otherwise. The terms "coupled," "fixed," "attached to," and the like refer to both direct coupling, fixing, or attaching, as well as indirect coupling, fixing, or attaching through one or more intermediate components or features, unless otherwise specified herein. As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive- or and not to an exclusive- or. For example, a condition A or B is satisfied by any one of the following: A is true (or present) and B is false (or not present), A is false (or not present) and B is true (or present), and both A and B are true (or present).

Terms of approximation, such as "about," "generally," "approximately," or "substantially," include values within ten percent greater or less than the stated value. When used in the context of an angle or direction, such terms include within ten degrees greater or less than the stated angle or direction. For example, "generally vertical" includes directions within ten degrees of vertical in any direction, e.g., clockwise or counter-clockwise.

Benefits, other advantages, and solutions to problems are described below with regard to specific embodiments. However, the benefits, advantages, solutions to problems, and any feature(s) that may cause any benefit, advantage, or solution to occur or become more pronounced are not to be construed as a critical, required, or essential feature of any or all the claims.

In general, the present invention is directed to a multipurpose worktable that may transition between a worktable configuration and a collapsed, e.g., storage, configuration. In the collapsed configuration, the multipurpose worktable may form a transport dolly having a platform, wheel(s) and a handle. The present invention is further directed to a storage support interface that may be coupled to a worktable or other surface. The storage support interface includes one or more mounts configured to receive a complementary Y-shaped bracket. The present inventors have found that the multipurpose worktable and storage support interface of the present invention may provide enhanced accessibility, mobility, and ease of storage for a user.

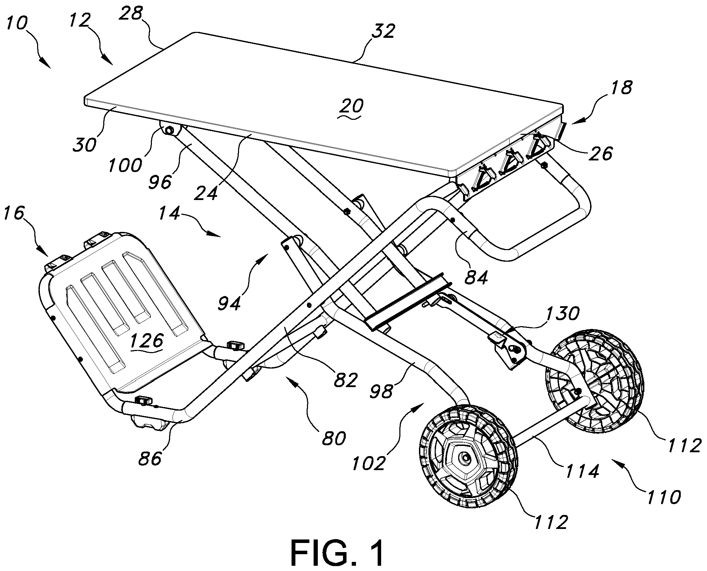

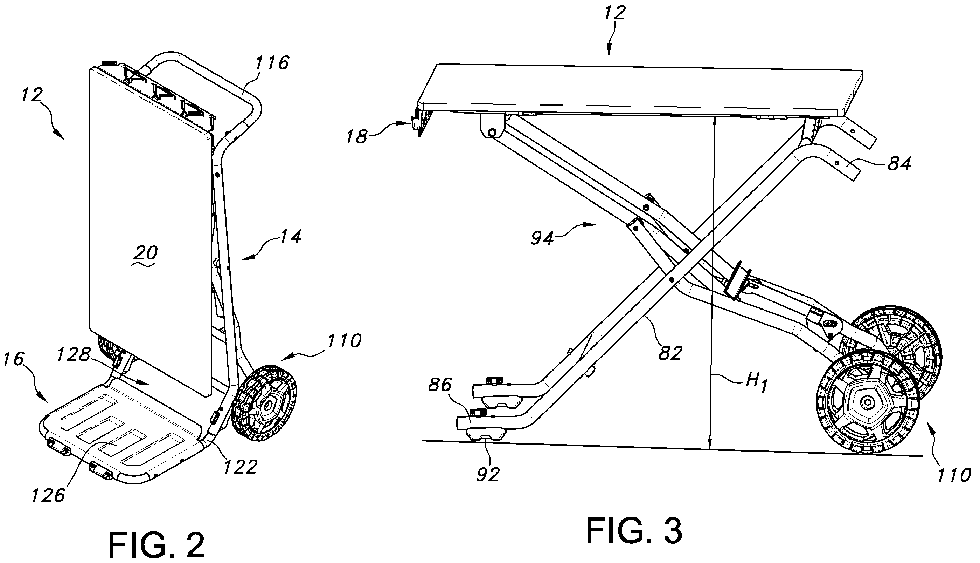

Referring now to the drawings, FIG. 1 illustrates a multipurpose worktable 10. The multipurpose worktable 10 has a planar work surface 12 supported by a leg assembly 14. FIG. 1 illustrates the worktable 10 in an extended position in which the leg assembly 14 is extended to support the work surface 12 as a worktable for a user, e.g., as a miter saw compatible work surface. In some aspects of the present invention, the multipurpose worktable 10 may include one or more storage support interfaces 18 configured to receive a complementary bracket to store items, such as tools or accessories, coupled to the work surface 12. FIG. 2 illustrates the multipurpose worktable 10 in a collapsed position in which the leg assembly 14 is folded into a collapsed position, e.g., to minimize the size of the multipurpose worktable 10 for storage. Moreover, as illustrated in FIG. 2, the multipurpose worktable 10 may include a platform 16 coupled to the leg assembly 14 so that the multipurpose worktable 10 transforms into a transport dolly in the collapsed position (illustrated in FIG. 2 and described in further detail below).

Still referring to FIG. 1, the work surface 12 may include an upper surface 20, a lower surface 22. The upper surface 20 may be a planar surface forming a planar work area for a user. In some aspects, the lower surface 22 may be a planar surface, and the lower surface 22 may be generally parallel to the upper surface 20. The work surface 12 may have one or more side surfaces 24 extending between the upper surface 20 to the lower surface 22 around a perimeter of the work surface 12. For instance, when the work surface 12 has a generally rectangular perimeter shape as illustrated in FIGS. 1-2, the side surfaces 24 may extend along a first side 26, second side 28, third side 30, and fourth side 32, whereby the first side 26 and second side 28 are generally parallel to each other and the third side 30 and the fourth side 32 are generally parallel to each other. The first side 26 and second side 28 may alternatively be described as a "first end" and a "second end" of the work surface 12 when describing the relatively positioning of the leg assembly 14 to the work surface 12.

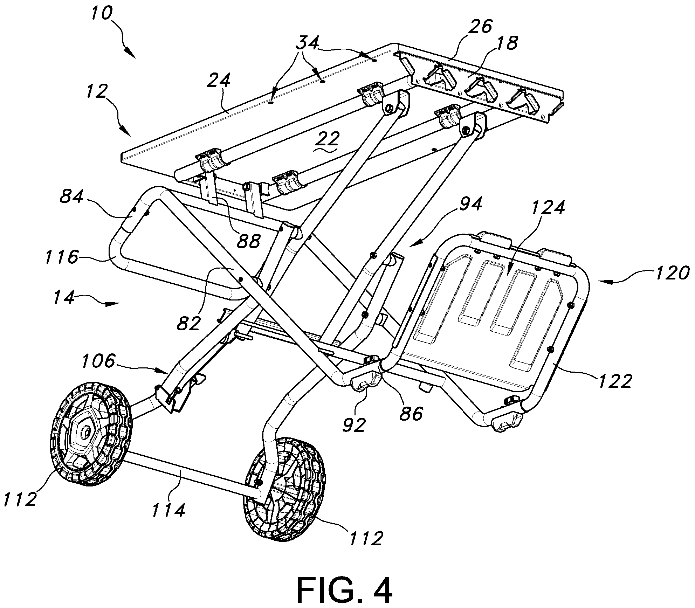

As best seen in FIG. 4, the work surface 12 may have one or a plurality of receptacles 34 configured to receive a fastener (not shown). For instance, a plurality of receptacles 34 may be present on the lower surface 22 of the work surface 12. As illustrated in FIG. 4, in one arrangement, the receptacles 34 may be spaced inward from and parallel to the sides 26, 28, 30, 32. The receptacles 34 may enable a user to couple one or more accessories to the work surface 12, e.g., by inserting a fastener into a receptacle. For instance, one or more tools or storage accessories may be coupled to the work surface 12 by utilizing the receptacles 34, such as saw tools, e.g., a miter saw or other saw, and/or storage accessories, such as storage bins, storage hooks, etc.

For instance, a storage support interface 18 may be coupled to the work surface 12. The storage support interface 18 may provide storage for tools and/or accessories coupled to the work surface 12, enhancing accessibility for the user. For instance, the storage support interface 18 may be coupled to the work surface 12 by fastening the storage support interface 18 with one or more fasteners (not shown) to the receptacle(s) 34 described above. In some aspects of the present invention, the storage support interface 18 may be repositionable relative to the work surface 12. In other words, the user may choose a convenient or desired position for the storage support interface 18 relative to the work surface 12, e.g., along any of the sides 26, 28, 30, 32.

The storage support interface 18 may have a body 40 having a coupling portion 42 and a storage portion 44. The coupling portion 42 may extend along an upper side of the storage support interface 18, and may extend, e.g., in a horizontal plane. One or more openings 46 extend through the coupling portion 42 and are each configured to receive a fastener therein. To couple the storage support interface 18 to a support structure, e.g., the work surface 12, the planar coupling portion 42 may be aligned with the support structure (e.g., the lower surface 22 as shown in FIG. 4) and fasteners may be inserted through the openings 46 to fasten to the support structure. While FIG. 4 illustrates the storage support interface 18 coupled to the work surface 12, the present invention contemplates coupling the storage support interface 18 to any desired support structure, particularly any horizontal planar support structure compatible with the coupling portion 42.

The storage portion 44 of the storage support interface 18 may include one or more mounts 50 configured to receive a complementary bracket (not shown). For instance, each mount 50 may include a first angled support 52 and a second angled support 54 which angle toward each other in a downward extending direction. Each of the first angled support 52 and the second angled support 54 may have a projection portion 56 projecting outward from a planar face 60 (also referred to as a planar surface) of the mount 50. Opposite the planar face 60, the first angled support 52 and the second angled support 54 may each have a retaining portion 58. For instance, the retaining portion 58 may be curved or bent inward toward the planar face 60. Moreover, the respective retaining portions 58 of the first angled support 52 and the second angled support 54 may be curved or bent toward each other so as to form a receiving space 62 therein. Additionally, an opening 64 may be formed between the first angled support 52 and the second angled support 54 at a lower side of each mount 50. The opening 64 may communicate or extend from the receiving space 62 so that the bracket may be supported in the receiving space 62 and may extend through the opening 64.

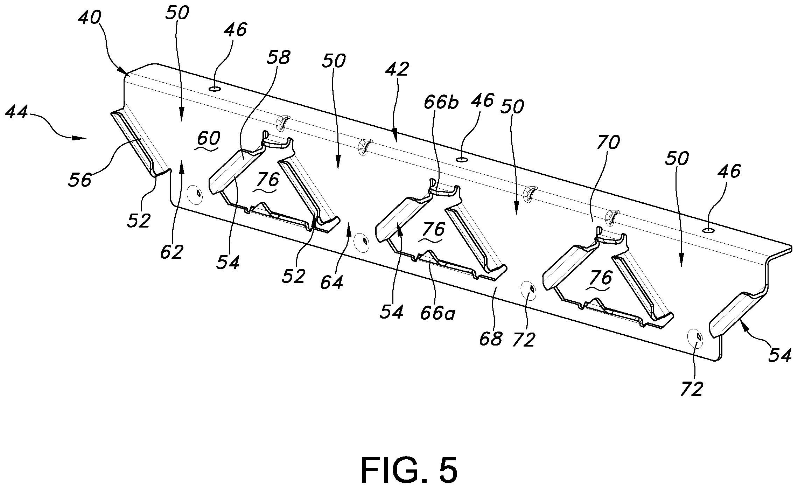

The storage portion 44 may further include one or more hooks 66. For instance, one or more hooks 66 may be provided between each mount 50. As illustrated in FIG. 5, the storage portion 44 may include a bottom section 68 extending below the mounts 50, and one or more lower hooks 66a may extend from the bottom section 68. Similarly, the storage portion 44 may include a top section 70 extending above the mounts 50, e.g., connecting the mounts 50 together, and one or more upper hooks 66b may extend from the top section 70. For instance, the bottom section 68 and the top section 70 may be coplanar with the planar face 60 of the mount(s) 50. In some aspects of the invention, there may be a lower hook 66a and an upper hook 66b between each mount 50.

The storage portion 44 may further include one or more fastener openings 72 similar to the fastener openings 46 of the coupling portion 42. In this manner, the storage support interface 18 may be coupled to a support structure in a variety of orientations or planes.

As illustrated in FIG. 5, in some aspects of the present invention, the storage support interface 18 may be integrally formed from one piece of material. For instance, the storage support interface may be integrally formed from a single piece of metal, e.g., bent or stamped metal to form the structures of the storage support interface 18. In this regard, the coupling portion 42 and the storage section 44 may be formed from the single piece of material and optionally bent along an axis 74. Optionally, the coupling portion 42 and a plane of the storage section 44 may be generally perpendicular to each other, e.g., to fit along an edge of the work surface 12. Additionally, in some aspects, the storage portion 44 may include one or more negative spaces 76 where the material of the storage support interface 18 is bent out of the plane of the planar space 60, top section 70 and bottom section 68, e.g., to form one of the angled supports 52, 52 or hooks 66.

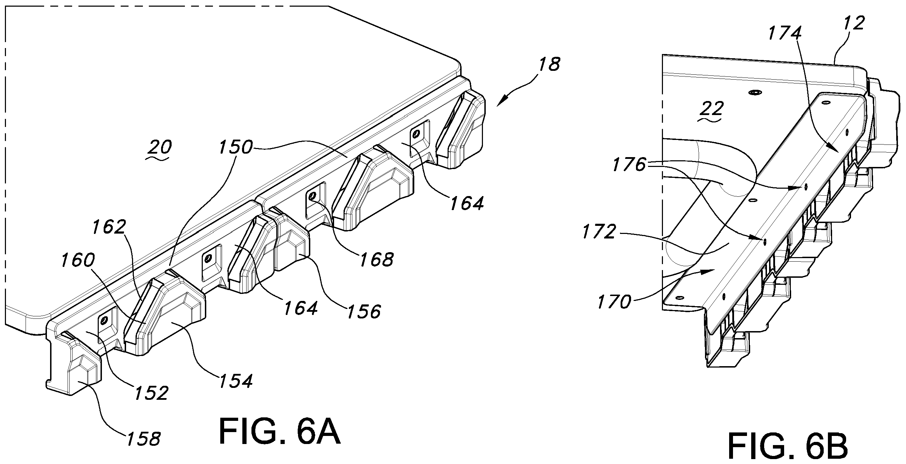

FIGS. 6A-6B illustrate another storage support interface 18 of the present invention. One or more storage accessory rails 150 may be coupled to the work surface 12. For instance, two storage accessory rails 150 may be coupled to the work surface 12, e.g., along a side edge 26 or 28 of the work surface 12. In some aspects, a mounting bracket 170 may be provided to couple the storage accessory rail 150 to the work surface 12. A base section 172 of the mounting bracket 170 may extend coplanar with the bottom surface 22 of the work surface 12 and be coupled thereto, e.g., with fasteners. A rail coupling surface 174 may extend generally downward from the base section 172 and may be provided with fastener openings 176 to receive a fastener therethrough to couple the storage accessory rail 150. In some aspects, the rail coupling surface 174 may extend generally coplanar with the side surface 26 or 26 from which the storage accessory rail 150 extends.

The storage accessory rail 150 may include a generally planar portion 152, a central protrusion 154 protruding outward relative to the planar portion 152, a first side protrusion 156 disposed at a first side of the rail 150, and a second side protrusion 158 at a second side of the rail 150. Each of the protrusions may alternatively be referred to as "cleats." A slot 162 may be formed through the planar portion 152 along one or more edges of each cleat, e.g., to permit engagement of a complementary bracket (not shown). Further, each cleat may include an overhanging portion 160 along one or more edges thereof, e.g., along the slot(s) 162, to form a receiving space between the generally planar portion 152 and the overhanging portion 160 to hold a bracket therein. A mount may be formed between two adjacent protrusions, e.g., the central protrusion 154 and the first side protrusion 156, with a bracket receiving space 164 formed along the generally planar portion 152 therebetween. One or more fastener openings 168 may be formed through the generally planar portion 152 to receive a fastener for fastening the rail 150 to the mounting bracket 170.

In some aspects of the present invention, as illustrated, each of the first side protrusion 156 and the second side protrusion 158 may be formed as generally one half of the central protrusion 154. In this regard, when multiple storage accessory rails 150 are mounted adjacent to each other, a full cleat may be formed by the first and second side protrusions 156, 158 of the adjacent rails 150, as illustrated in FIG. 6A. Each of the cleats may have one or more angled sides that extend at an angle relative to a longitudinal axis of the rail 150 and a vertical axis of the rail 150. In some aspects, each of the cleats may further include a vertical side or edge disposed below the angled surface, e.g., so the bracket receiving space 164 forms generally a Y-shape.

The leg assembly 14 will now be described in further detail. The leg assembly 14 may include a first leg 80 and a second leg 94. Each of the legs of the leg assembly may be formed from any suitable material and shape, such as plastic or metal hollow or solid rods. For instance, the legs may be formed from hollow metal tubes. In some aspects of the present invention, there may be a single first leg 80 and a single second leg 94 (not shown). In other embodiments, there may be a pair of first legs 80 and a pair of second legs 94. For instance, a pair of first legs 80 may be generally parallel, and a pair of second legs 94 may be generally parallel to each other.

The first leg 80 may include an elongated section 82, a coupling section 84 extending at an angle relative to the elongated section 82 at an upper end thereof, and a foot section 86 extending at an angle relative to the elongated section 82 at a lower end thereof. The coupling section 84 may be coupled with a connecting piece 88. The connecting piece 88 may be configured to couple with a base 90 upon which the work surface 12 is supported and/or coupled to the leg assembly 14. A foot 92 may be coupled to the foot section 86 and configured to support the first leg 80 on the ground or floor or other surface.

The second leg 94 may include a first elongated section 96 and a second elongated section 98. The first elongated section 96 may be coupled to the work surface 12 at an upper end of the first elongated section 96. For instance, a pivotable coupling 100 may be provided to pivotably couple the upper end of the first elongated section 96 to the lower surface 22 of the work surface 12. The second elongated section 98 may be coupled to the first elongated section 96 at an upper end and a foot section 102 at a lower end. For instance, a pivotable coupling 104 may be provided between the second elongated section 98 and the first elongated section 96 to enable pivoting of the second elongated section 98 relative to the first elongated section 96, e.g. to fold the work table into the collapsed position. The second elongated section 96 may further include a pivotable coupling 106 to couple the second elongated section 96 with the elongated section 82 of the first leg 80.

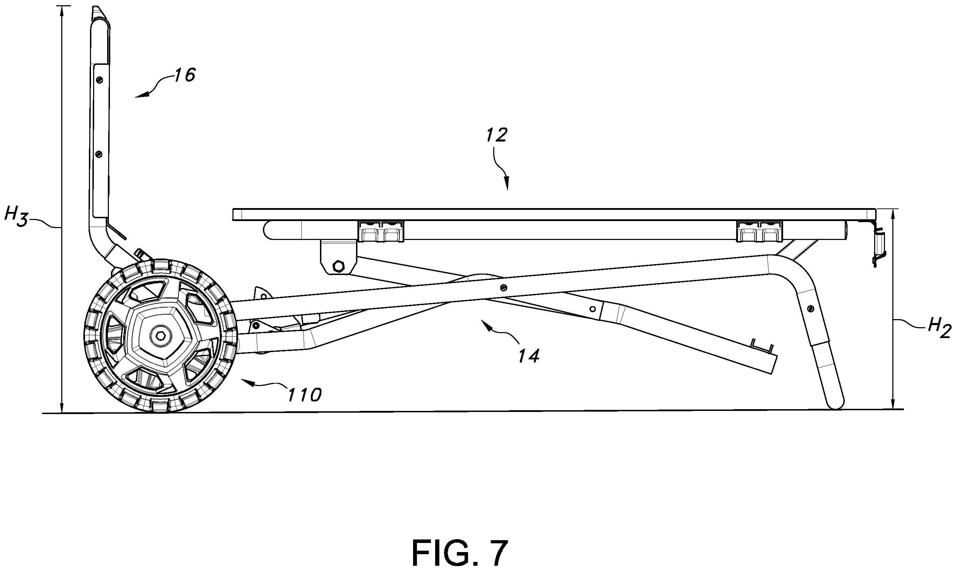

The second leg 94 may extend in a transverse, e.g., opposite, direction relative to the first leg 80 and the work surface 12, e.g., such that the elongated section 82 of the first leg 80 and the second leg 94 may form an X shape or transverse arrangement relative to each other in the extended position (see FIGS. 1 and 4). When the worktable 10 is transitioned into the collapsed position (see FIGS. 2 and 7) by pivoting the first leg 80 and second leg 94, the first leg 80 and the first elongated section 96 of the second leg 94 may extend generally parallel to each other and parallel to the lower surface 22 of the work surface 12. The second elongated section 98 may extend generally parallel to the first elongated section 96. The foot section 86 and the foot section 102 may be disposed generally adjacent to each other in the collapsed position of the multipurpose worktable 10 (see FIG. 2).

The leg assembly 14 may be provided with a locking mechanism including a foot lever 130 configured to enable a user to lock the first leg 80 and second leg 94 in either the extended position or collapsed position relative to each other. For instance, the foot lever 130 may be coupled with the second leg 94 as illustrated. Engagement of the foot lever 130 may enable locking of the locking mechanism, and disengagement of the foot lever 130 may unlock the locking mechanism to enable a user to transition between the extended and collapsed positions. As illustrated in FIG. 3, the work surface 12 may extend a height H1 above the floor surface when the multipurpose worktable 10 is in the extended position. The height H1 may be in a range from about 30 inches to about 36 inches, such as from about 32 inches to about 33 inches, for instance, about 33.6 inches.

The foot section 102 of the second leg 94 may include a wheel assembly 110. The wheel assembly 110 may include a wheel 112 and an axle 114. In one aspect of the invention having two legs 94, two wheels 112 may be provided and may be coupled by the axle 114. The wheel assembly 110 may enable the worktable 10 to be easily transported by rolling along the wheels 112.

Turning back to the first leg 80, a handle 116 may be removably coupled to the coupling section 84 a platform 120 may be removably coupled to the foot section 86. The platform 120 may include a platform frame 122 configured to couple with the foot section 86, e.g., by insertion, and a platform body 124. The platform body 124 may have a generally rectangular shape to provide a surface area 126 for supporting one or more objects, such as storage containers. When the worktable 10 is in the collapsed position, the platform 120 may extend generally perpendicular to the work surface 12, forming a support region 128 between the work surface 12 and the platform surface area 126. In this manner, the platform 120 can enable the multipurpose worktable 10 to function as a transport dolly in the collapsed position, as illustrated in FIG. 2, for transportation of items supported by the platform 120 and the work surface 12 in the support region 128.

The multipurpose worktable 10 of the present invention may stand in an upright position (with the work surface oriented vertically) on its own, i.e., without requiring external support, when it is in the collapsed or storage position. In this arrangement, the multipurpose worktable 10 may also be referred to as a multipurpose transport dolly or hand truck, as shown in FIG. 2 and described above. The leg assembly 14 may form a frame for the transport dolly. The work surface 12 may form a support surface for the transport dolly. The collapsed position of the leg assembly 14 described above may also be referred to as a storage position for the leg assembly 14 or frame. When standing upright, the wheel assembly 110 and the platform frame 122 may support the multipurpose worktable 10 on the ground or floor.

The multipurpose worktable 10 may further be used in a horizontal orientation when in the collapsed position, e.g., for storage of raw materials or to keep materials off of the ground, to place taller work items (cabinetry, doors, etc.) on while performing work. When the multipurpose worktable 10 is in the collapsed position with the work surface 12 in a horizontal orientation, the surface 20 may have a height H2 of about 10 inches to about 15 inches, such as about 12.5 inches, from the floor. For instance, a lower height could benefit the operator to have a more advantageous or more appropriate work height depending on what the user's current application is.

As further illustrated in FIG. 7, when the multipurpose worktable 10 is in the collapsed position with the work surface 12 in a horizontal orientation, the platform 18 may extend a height H3 above the floor. The height H3 may be in a range from about 24 inches to about 30 inches. A typical height for a tonneau (i.e., truck bed) cover is approximately 18 inches to 22 inches. Thus, the present inventors have found that the removability of the platform 16 from the leg assembly 14 can enable a user to transport or store the multipurpose worktable 10 of the present invention in a standard work truck beneath a tonneau cover.

Further aspects of the invention are provided by one or more of the following embodiments:
A multipurpose worktable comprising: a work surface, a leg assembly, at least one wheel, and a platform. The work surface has an upper surface, a lower surface, and at least one side surface extending between the upper surface and lower surface. The leg assembly is coupled to the lower surface and is configured to transition between an extended position and a collapsed position. The at least one wheel is coupled to the leg assembly, and the platform is coupled to the leg assembly. In the collapsed position, an upper surface of the platform extends generally perpendicular relative to the upper surface of the work surface.

The multipurpose worktable of any one or more of the embodiments, wherein in the collapsed position, the multipurpose worktable forms a transport dolly.

The multipurpose worktable of any one or more of the embodiments, wherein in the collapsed position, the at least one wheel and the platform are disposed at one end of the work surface.

The multipurpose worktable of any one or more of the embodiments, wherein in the collapsed position, the multipurpose worktable is configured to stand self-supported in a vertical orientation having the upper surface extending vertically and in a horizontal orientation having the upper surface extending horizontally.

The multipurpose worktable of any one or more of the embodiments, the upper surface having a height of less than about 15 inches from a ground surface when the multipurpose worktable is in the horizontal orientation of the collapsed position.

The multipurpose worktable of any one or more of the embodiments, wherein in the extended position, the at least one wheel and the platform are disposed at opposite ends of the multipurpose worktable.

The multipurpose worktable of any one or more of the embodiments, the leg assembly further comprising a handle.

The multipurpose worktable of any one or more of the embodiments, the handle being disposed at an opposite end of the leg assembly relative to the platform.

The multipurpose worktable of any one or more of the embodiments, wherein the platform is removably coupled to the leg assembly.

The multipurpose worktable of any one or more of the embodiments, wherein a first leg of the leg assembly is pivotally coupled to the work surface.

The multipurpose worktable of any one or more of the embodiments, wherein the platform is coupled to a second leg of the leg assembly.

The multipurpose worktable of any one or more of the embodiments, further comprising a storage support interface coupled to the work surface, the storage support interface comprising at least one mount configured to receive a complementary bracket.

The multipurpose worktable of any one or more of the embodiments, wherein the storage support interface extends downward from the lower surface of the work surface.

The multipurpose worktable of any one or more of the embodiments, wherein the storage support interface extends along at least one side of the work surface.

The multipurpose worktable of any one or more of the embodiments, each mount comprising two protrusions and a bracket receiving space is formed between the two protrusions.

The multipurpose worktable of any one or more of the embodiments, wherein the storage support interface is formed from a single piece of material.

A multipurpose transport dolly comprising: a frame; a platform coupled to the frame; a support surface extending generally perpendicular to the platform and supported by the frame; a wheel assembly coupled to the frame; and a handle coupled to the frame. The frame comprises a pair of legs configured to transition between a storage position and an extended position. In the extended position, the pair of legs supports the support surface and the support surface forms a worktable.

A storage support interface comprising: a body having a planar surface and one or more mounts; each mount including: a first angled support having a projection portion projecting outward from the planar surface and a retaining portion extending at an angle relative to the projection portion, and a second angled support having a projection portion projecting outward from the planar surface and a retaining portion extending at an angle relative to the projection portion. The first angled support and the second angled support are angled toward each other in a downward extending direction. An opening is formed between a lower end of the first angled support and a lower end of the second angled support. Each mount has a Y-shaped bracket receiving section configured to receive a Y-shaped bracket therein. The body further includes an opening between each mount, and a coupling section formed in the body above or below the one or more mounts.

The storage support interface of any one or more of the embodiments, wherein the storage support interface is formed from a single piece of material, and the opening between each mount includes negative space formed by bending the first angled support and the second angled support out of the plane of the planar surface.

The storage support interface of any one or more of the embodiments, further including at least one hook above or below the opening between each mount, the hook projecting at an angle relative to the planar surface.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

## Claims

1. A multipurpose worktable comprising:
a work surface having an upper surface, a lower surface, and at least one side surface extending between the upper surface and lower surface;
a leg assembly coupled to the lower surface, the leg assembly being configured to transition between an extended position and a collapsed position;
at least one wheel coupled to the leg assembly; and
a platform coupled to the leg assembly,
wherein in the collapsed position, an upper surface of the platform extends generally perpendicular relative to the upper surface of the work surface.

2. The multipurpose worktable of claim 1, wherein in the collapsed position, the multipurpose worktable forms a transport dolly.

3. The multipurpose worktable of claim 1 or claim 2, wherein in the collapsed position, the at least one wheel and the platform are disposed at one end of the work surface.

4. The multipurpose worktable of any one of the preceding claims,
wherein in the collapsed position, the multipurpose worktable is configured to stand self-supported in a vertical orientation having the upper surface extending vertically and in a horizontal orientation having the upper surface extending horizontally, preferably wherein the upper surface has a height of less than about 15 inches from a ground surface when the multipurpose worktable is in the horizontal orientation of the collapsed position.

5. The multipurpose worktable of any one of the preceding claims,
wherein in the extended position, the at least one wheel and the platform are disposed at opposite ends of the multipurpose worktable.

6. The multipurpose worktable of any one of the preceding claims, the leg assembly further comprising a handle, preferably wherein the handle is disposed at an opposite end of the leg assembly relative to the platform.

7. The multipurpose worktable of any one of the preceding claims,
wherein the platform is removably coupled to the leg assembly.

8. The multipurpose worktable of any one of the preceding claims,
wherein a first leg of the leg assembly is pivotally coupled to the work surface preferably wherein the platform is coupled to a second leg of the leg assembly.

9. The multipurpose worktable of any one of the preceding claims, further comprising a storage support interface coupled to the work surface, the storage support interface comprising at least one mount configured to receive a complementary bracket, preferably wherein the storage support interface is formed from a single piece of material.

10. The multipurpose worktable of claim 9, wherein the storage support interface extends downward from the lower surface of the work surface.

11. The multipurpose worktable of claim 9 or claim 10, wherein the storage support interface extends along at least one side of the work surface.

12. The multipurpose worktable of any one of claims 9-11, each mount comprising two protrusions and a bracket receiving space is formed between the two protrusions.

13. A storage support interface comprising:
a body having a planar surface and one or more mounts, each mount including: a first angled support having a projection portion projecting outward from the planar surface and a retaining portion extending at an angle relative to the projection portion, and a second angled support having a projection portion projecting outward from the planar surface and a retaining portion extending at an angle relative to the projection portion, wherein the first angled support and the second angled support are angled toward each other in a downward extending direction; and an opening formed between a lower end of the first angled support and a lower end of the second angled support; wherein each mount has a Y-shaped bracket receiving section configured to receive a Y-shaped bracket therein; the body further including an opening between each mount; and a coupling section formed in the body above or below the one or more mounts.

14. The storage support interface of claim 13, wherein the storage support interface is formed from a single piece of material, and the opening between each mount includes negative space formed by bending the first angled support and the second angled support out of the plane of the planar surface.

15. The storage support interface of claims 13 or 14, further including at least one hook above or below the opening between each mount, the hook projecting at an angle relative to the planar surface.
